# EUROPEAN PATENT APPLICATION

(11) **EP 4 819 456 A1**
(43) Date of publication of application: **07.10.2026**
(21) Application number: 24897241.6
(22) Date of filing: 07.11.2024
(51) Int. Cl.: H02K 15/0273

(54) **CORE CLAMP DEVICE AND WIRE WINDING METHOD USING CORE CLAMP DEVICE**

(30) Priority: 27.11.2023 JP 2023199750
(71) Applicant: NITTOKU Co., Ltd., Saitama-city, Saitama 330-0854 (JP); Nittoku Europe GmbH, Klagenfurt, 9020 (AT)
(72) Inventor: NAGASE, Shigenobu, Fukushima-shi, Fukushima 960-1393 (JP); JENKO, Norbert, 9020 Klagenfurt (AT)
(74) Representative: Grünecker Patent- und Rechtsanwälte PartG mbB
(86) International application number: PCT/JP2024/039646
(87) International publication number: WO 2025/115554

(57) **Abstract**

A core clamp device (20) compresses a laminated core (6) constituted by a plurality of laminated magnetic steel plates in the lamination direction of the magnetic steel plates. The core clamp device (20) includes a pair of clamping pieces (31, 31) provided to respectively face the end faces of the laminated core (6) on both sides in the lamination direction; a support portion (21) extending in the lamination direction, the support portion (21) being configured to swingably support the pair of clamping pieces (31, 31); and an elastic member (41) provided between the pair of clamping pieces (31, 31), the elastic member (41) being configured to apply a biasing force to the pair of clamping pieces (31, 31) to compress the laminated core (6) in the lamination direction.

## Description

### TECHNICAL FIELD

The present invention relates to a core clamp device and a wire rod winding method using the core clamp device.

### BACKGROUND ART

Conventionally, a stator used in a rotating electrical machine such as an electric motor or a generator includes a stator core and coils mounted in slots of the stator core. A wire rod forming the coils is obtained by covering a conductor with an insulating coating, and the coils are insulated from the stator core.

For example, when the stator core is a laminated core that is a laminated body of magnetic steel plates, as the wire rod is wound around the laminated core to form the coil, the laminated core may be compressed in the lamination direction by the tension pulling the wire rod during winding, and the lamination gaps may be reduced, and thereby, winding tightening may be caused. When such winding tightening is caused, the laminated core serving as the winding core of the wire rod being wound contracts, causing, for example, loosening in the wire rod wound in the early stages of wire winding and winding disorder in the coil.

In order to prevent winding disorder in the coil during such winding, a winding device including a pressurizing mechanism that compresses the stator core in the lamination direction has been proposed (for example, see JP2019-129550A) in order to compress the laminated core in advance before the wire winding and prevent the laminated core from contracting during winding.

The pressurizing mechanism in this winding device has a support plate that supports a lower face of the stator core, a compression plate that abuts an upper face of the stator core, and a pressing portion that moves the compression plate. Furthermore, in this winding device, the pressing portion of the pressurizing mechanism has a turning shaft and a driving unit that rotates the turning shaft. In this winding device, when the driving unit rotates the turning shaft, the compression plate is moved to compress the stator core in the lamination direction.

### SUMMARY OF INVENTION

However, when the pressurizing mechanism is provided in the winding device, the structure of the winding device becomes complicated. This may cause the price of the winding device to be increased, resulting in an increase in the unit price of the stator. In addition, by providing the pressurizing mechanism, the winding device may become dedicated to the laminated core, and the versatility of the winding device may decrease.

For this reason, it is also conceivable to use a conventional winding device to compress and hold the laminated core using a conventional clamp device, without providing a pressurizing mechanism in the winding device.

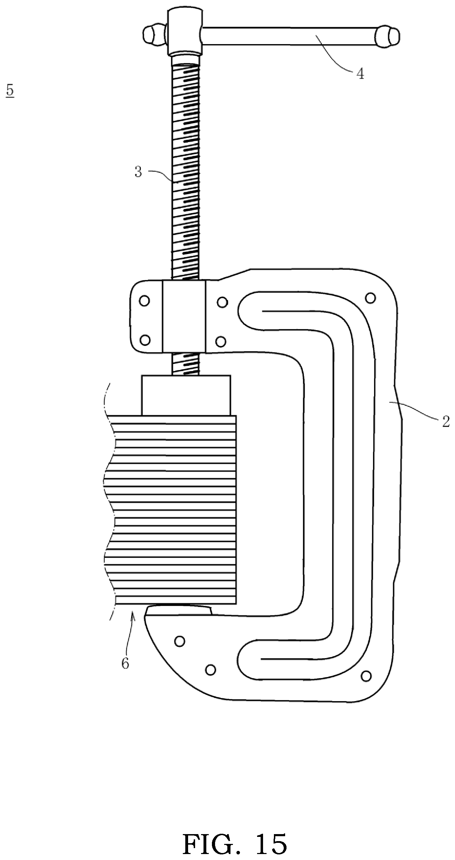

As a conventional clamp device, for example, as shown in FIG. 15, there exists a screw type clamp device 5 that has a C-shaped or U-shaped main body 2 and a male screw 3 at one end portion of the main body 2 that constitutes an opening into which an article to be clamped is inserted, the male screw 3 being for clamping the article between the one end portion and another end portion constituting the opening. Here, reference numeral 4 in FIG. 15 denotes a handle 4 for rotating the male screw 3.

It is also conceivable to use such a general screw type clamp device 5 to compress and hold a laminated core 6 from outside in the lamination direction independently of the winding device, and to perform the wire winding on the laminated core 6 using the conventional winding device.

However, because the stator core is a laminated body of magnetic steel plates, it has a relatively large weight, and it is necessary to compress the stator core with a relatively large force in order to close the gaps between the magnetic steel plates and prevent contraction in the lamination direction. However, with the general screw type clamp device 5, the tightening force of the male screw 3 is limited, and there are cases in which sufficient tightening force cannot be secured. In addition, when a worker performs tightening of the male screw 3, variations in the tightening force may occur, and it may become difficult to make the quality of winding uniform.

In addition, in the general screw type clamp device 5, the main body 2 is relatively large, and the male screw 3 that is provided in the main body 2 also protrudes from the main body 2 relatively long. With such a configuration, when the wire winding is to be performed by the conventional winding device on the stator core clamped by the screw type clamp device 5, it is conceivable that the winding portions of the winding device, for example, a nozzle or the like that moves while delivering the wire rod, come into contact with the clamp device 5. Therefore, it is also conceivable that the wire winding onto the laminated core 6 that is compressed by the general screw type clamp device 5 is difficult with the conventional winding device.

An object of the present invention is to provide a core clamp device for compressing a laminated core that allows use of a conventional winding device.

According to one aspect of the present invention, a core clamp device configured to compress a laminated core constituted by a plurality of laminated magnetic steel plates in a lamination direction of the magnetic steel plates, the core clamp device includes: a pair of clamping pieces provided to respectively face end faces of the laminated core on both sides in the lamination direction; a support portion extending in the lamination direction, the support portion being configured to swingably support the pair of clamping pieces; and an elastic member provided between the pair of clamping pieces, the elastic member being configured to apply a biasing force to the pair of clamping pieces to compress the laminated core in the lamination direction.

### BRIEF DESCRIPTION OF DRAWINGS

[FIG. 1] FIG. 1 is an enlarged cross-sectional view of portion A in FIG. 11, and is a structural cross-sectional view of a core clamp device according to an embodiment of the present invention in a state in which a laminated core is compressed.
[FIG. 2] FIG. 2 is a structural cross-sectional view of the core clamp device according to the embodiment of the present invention in a state immediately before the core clamp device compresses the laminated core.
[FIG. 3] FIG. 3 is a structural cross-sectional view of the core clamp device according to the embodiment of the present invention in a state in which compression of the laminated core is released.
[FIG. 4] FIG. 4 is a perspective view showing the shape of a bracket of the core clamp device according to the embodiment of the present invention.
[FIG. 5] FIG. 5 is a perspective view showing the shape of a fixing block of the core clamp device according to the embodiment of the present invention.
[FIG. 6] FIG. 6 is a perspective view showing the shape of an elastic member retainer of the core clamp device according to the embodiment of the present invention.
[FIG. 7] FIG. 7 is a front view of the core clamp device according to the embodiment of the present invention as seen from the laminated core side.
[FIG. 8] FIG. 8 is a rear view of the core clamp device according to the embodiment of the present invention.
[FIG. 9] FIG. 9 is a side view of the core clamp device according to the embodiment of the present invention.
[FIG. 10] FIG. 10 is a perspective view of the core clamp device according to the embodiment of the present invention.
[FIG. 11] FIG. 11 is a diagram showing an example of a winding device for performing wire winding on a laminated core that is compressed and held by the core clamp device according to the embodiment of the present invention.
[FIG. 12] FIG. 12 is a cross-sectional view of an outer rotor type stator core constituted by a laminated core and on which wire winding has been performed by a winding device.
[FIG. 13] FIG. 13 is a cross-sectional view of an inner rotor type stator core constituted by a laminated core and on which wire winding has been performed by a winding device.
[FIG. 14] FIG. 14 is an essential part cross-sectional view showing another conventional winding device for performing wire winding on an inner rotor type stator core.
[FIG. 15] FIG. 15 is a diagram showing a state in which a laminated core is compressed and held using a general screw type clamp device.

### DESCRIPTION OF EMBODIMENTS

Next, the best mode for carrying out the present invention will be described based on the drawings.

In general, a stator used in a rotating electrical machine such as an electric motor, a generator, or the like includes a stator core and coils mounted in slots of the stator core. The stator core of the present embodiment is a laminated core formed by punching magnetic steel plates into a predetermined shape and laminating them.

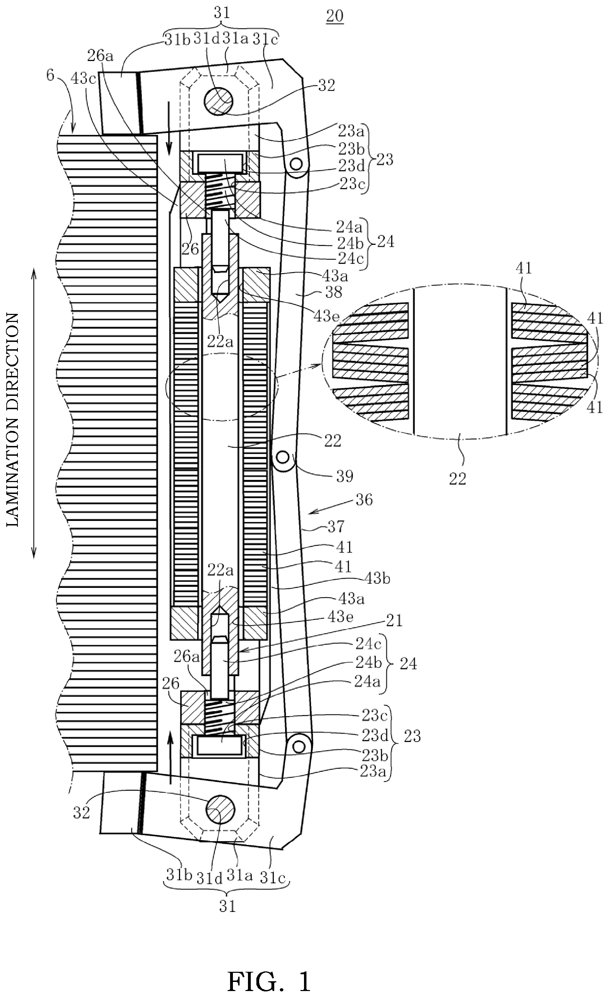

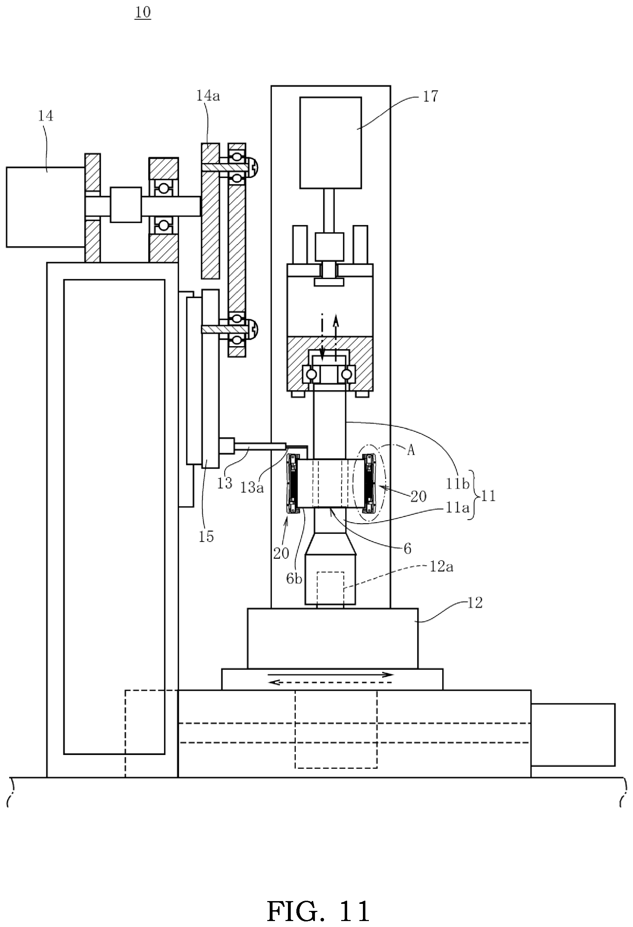

As shown in FIGs. 1 to 3, a core clamp device 20 compresses the laminated core 6 that is constituted by laminating a plurality of magnetic steel plates in the lamination direction. The compressed laminated core 6 can be subjected to wire winding performed by a conventional winding device 10 (see FIG. 11).

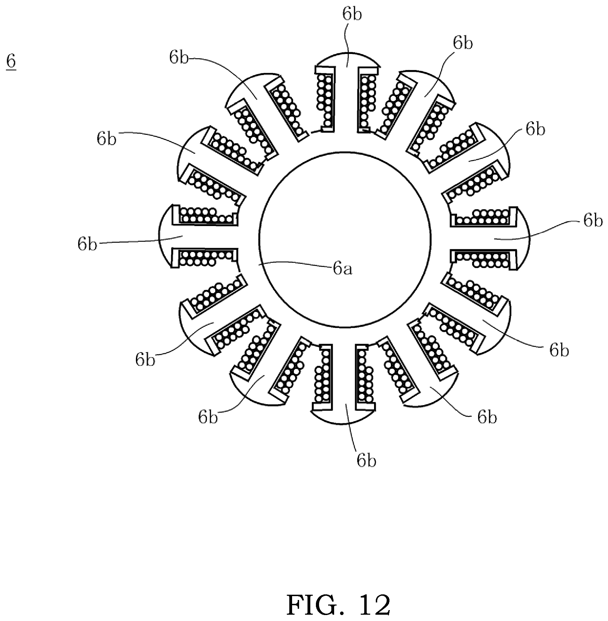

In the following, a description will be given taking the case in which the laminated core 6 is an outer rotor type as shown in FIG. 12 as an example. As shown in FIG. 12, the laminated core 6 of the outer rotor type includes: an annular portion 6a having an annular shape; and a plurality of teeth portions 6b projecting radially from the outer peripheral surface of the annular portion 6a toward the radially outer side of the annular portion 6a.

FIG. 11 shows an example of an existing winding device 10 that performs the wire winding on the teeth portions 6b of the laminated core 6. The winding device 10 shown in FIG. 11 includes: a support tool 11 that supports the laminated core 6; a swinging servomotor 12 serving as a laminated core operating mechanism that moves the laminated core 6 such that the teeth portions 6b swing together with the support tool 11; and a nozzle moving mechanism 14 that moves a nozzle 13 in the direction orthogonal to the axes of the teeth portions 6b, that is, in the lamination direction of the magnetic steel plates of the laminated core 6 (hereinafter, simply referred to as "the lamination direction").

As shown in FIG. 11, the support tool 11 has a rod-shaped core rod 11a that extends in the vertical direction and on the upper edge of which the laminated core 6 is placed horizontally, and a pressing member 11b that presses the annular portion 6a of the laminated core 6 placed on the upper edge of the core rod 11a from above. A lower end of the core rod 11a is attached to a rotary shaft 12a of the swinging servomotor 12.

Note that reference numeral 17 in FIG. 11 denotes a fluid pressure cylinder 17 that raises and lowers the pressing member 11b. By lowering the pressing member 11b by the fluid pressure cylinder 17, the pressing member 11b presses the annular portion 6a of the laminated core 6 from above.

The nozzle moving mechanism 14 is constituted by, for example, a servomotor. An operation plate 14a is attached to a rotary shaft of the servomotor, and the operation plate 14a is rotated by rotating the rotary shaft. Furthermore, an elevating plate 15 to which the nozzle 13 is attached is connected to the operation plate 14a. The elevating plate 15 is raised and lowered in the vertical direction as the operation plate 14a rotates. Therefore, by rotating the nozzle moving mechanism 14 (the servomotor), it is possible to move the nozzle 13 in the vertical direction.

Then, by utilizing a combination of the swinging movement of the laminated core 6 and the movement of the nozzle 13 in the lamination direction, the winding device 10 causes a small-diameter portion 13a at the tip of the nozzle 13 to revolve around the teeth portion 6b, thereby winding the wire rod delivered from the nozzle 13 around the teeth portion 6b.

The core clamp device 20 compresses, in the lamination direction, the tip end portion of the teeth portion 6b of the laminated core 6 that is supported by the support tool 11 of the winding device 10. As shown in FIGs. 1 to 3, the core clamp device 20 includes: a pair of clamping pieces 31, 31 that are provided so as to respectively face the end faces of the laminated core 6 on both sides in the lamination direction; a support portion 21 that extends in the lamination direction and swingably supports the pair of clamping pieces 31, 31; and an elastic member 41 that applies, to the pair of clamping pieces 31, 31, a biasing force of compressing the laminated core 6 in the lamination direction.

As shown in FIGs. 1 to 3, the support portion 21 includes: a shaft 22 that extends in the lamination direction of the laminated core 6; and a pair of brackets 23, 23 provided at both ends of the shaft 22 so as to be movable with respect to the shaft 22 and to which the clamping pieces 31 are respectively attached.

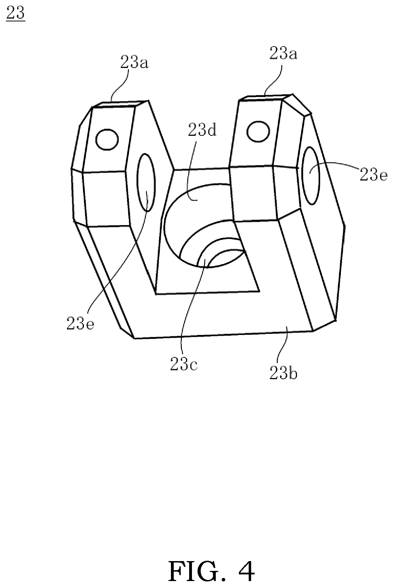

Because the pair of brackets 23, 23 have the same structure, description will be given of only one bracket 23 in the following. As shown in FIG. 4, the bracket 23 includes: a pair of rising pieces 23a, 23a between which an intermediate pivot portion 31a of the clamping piece 31, which will be described later, is inserted; and a connecting portion 23b that connects base ends of the pair of rising pieces 23a, 23a. In the connecting portion 23b, an insertion hole 23c through which one of connecting pins 24 is inserted and a counterbore hole 23d that has a larger diameter than the insertion hole 23c and in which a head portion 24a of the connecting pin 24 is embedded are formed coaxially at the center.

As shown in FIGs. 1 to 3, each of the connecting pins 24 has: the head portion 24a; a male thread portion 24b that is formed so as to project from the head portion 24a in the axial direction; and a pin portion 24c that is formed coaxially with the male thread portion 24b so as to project from the male thread portion 24b in the direction opposite to the head portion 24a in the axial direction. The pin portion 24c is formed to have a circular cross section and a smaller diameter than the male thread portion 24b. The pin portion 24c and the male thread portion 24b of the connecting pin 24 are inserted through the insertion hole 23c from the counterbore hole 23d side of the connecting portion 23b, and thereby, the male thread portion 24b is screwed into a female threaded hole 26a of one of fixing blocks 26, which will be described later.

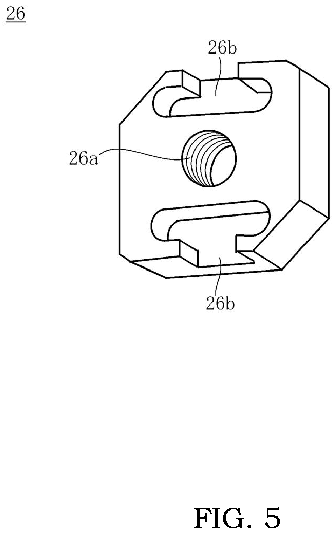

As shown in FIG. 5, each of the fixing blocks 26 in the present embodiment has a substantially rectangular parallelepiped shape, and the female threaded hole 26a into which the male thread portion 24b of the connecting pin 24 can be screwed is formed at the center. As shown in FIGs. 1 to 3, by clamping the connecting portion 23b of the bracket 23 by the fixing block 26 and the head portion 24a of the connecting pin 24, the connecting pin 24 is integrated with the bracket 23.

The shaft 22 is provided between the pair of brackets 23, 23. The shaft 22 is a rod-shaped member with a circular cross section. Pin holes 22a are respectively formed at both ends of the shaft 22 so as to extend in the axial direction, and into which the pin portions 24c of the connecting pins 24 are slidably inserted, respectively. The pin holes 22a are each formed to be longer than the length of the pin portion 24c. By inserting the pin portions 24c of the connecting pins 24 into the pin holes 22a on both sides of the shaft 22, respectively, the pair of brackets 23 are each movably supported by the shaft 22.

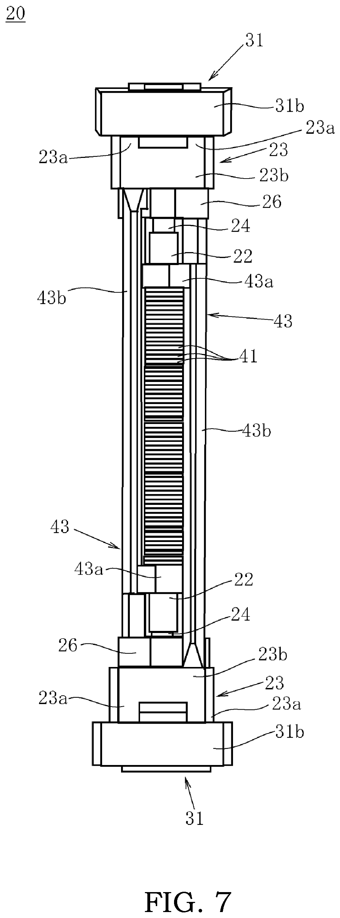

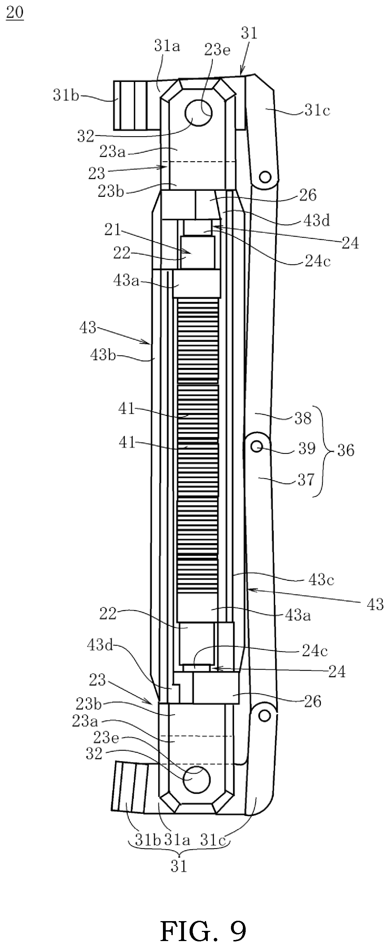

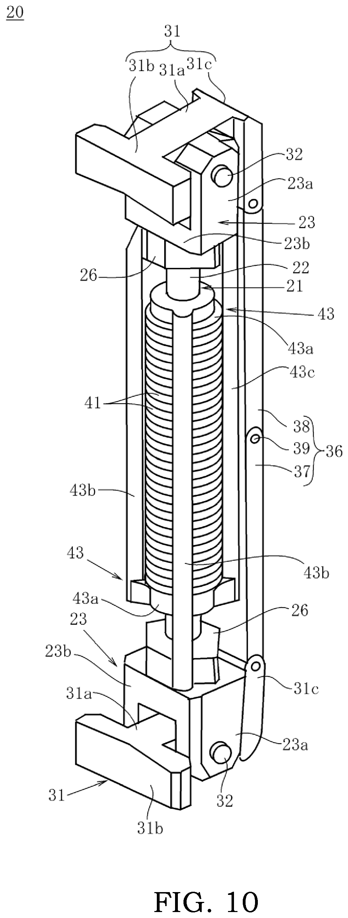

As shown in FIGs. 7 to 10, the clamping piece 31 has: the intermediate pivot portion 31a that is inserted between the pair of rising pieces 23a, 23a of the bracket 23 and is swingably supported by the bracket 23; a clamping portion 31b that is formed on the first end side of the intermediate pivot portion 31a and that faces the end face of the laminated core 6 in the lamination direction; and an operation portion 31c that is formed on the second end side of the intermediate pivot portion 31a. A pivot hole 31d penetrating through the intermediate pivot portion 31a is formed in the intermediate pivot portion 31a (see FIGs. 1 to 3).

By arranging support holes 23e of the bracket 23 and the pivot hole 31d of the clamping piece 31 so as to be coaxial, and inserting a pivot pin 32 through the support holes 23e and the pivot hole 31d, the clamping piece 31 is pivotally supported by the bracket 23 so as to be swingable such that the clamping portion 31b faces the end face of the laminated core 6 in the lamination direction.

The clamping portions 31b of the pair of clamping pieces 31, 31 are each formed to have a width corresponding to the width of the tip end portion of the teeth portion 6b (see FIG. 12) of the laminated core 6 to be compressed. In addition, the clamping portions 31b of the pair of clamping pieces 31, 31 are each formed in such a shape that the tip of the clamping portion 31b makes surface contact with the end face of the tip end portion of the teeth portion 6b of the laminated core 6.

As shown in FIGs. 1 to 3 and the like, the core clamp device 20 further includes an operation connection portion 36 that causes the pair of clamping pieces 31, 31 to swing. The operation connection portion 36 in the present embodiment includes a pair of arm members 37, 38 that are linked to each other so as to be foldable.

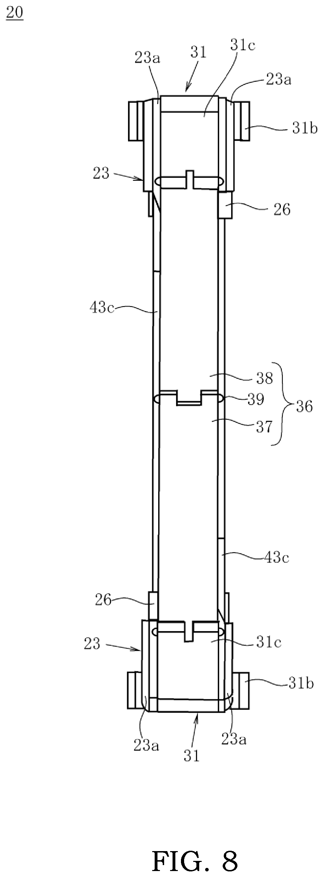

As shown in FIGs. 8 to 10, the pair of arm members 37, 38 are each formed of an elongated rod-shaped steel plate. First ends of the arm members 37, 38 are pivotally supported by a pivot pin 39 serving as a pivot point. Second ends of the arm members 37, 38 are pivotally supported by the operation portions 31c of the clamping pieces 31 that are provided at both ends of the shaft 22 via the brackets 23, respectively. Viewed from another perspective, the operation connection portion 36 formed by the pair of arm members 37, 38 is provided so as to connect the operation portions 31c of the pair of clamping pieces 31, 31, which are provided at both ends of the shaft 22, to each other. As shown in FIGs. 1 to 3 and the like, the arm members 37, 38 can be folded such that the pivot pin 39 moves toward and away from the shaft 22.

The widths of the pair of arm members 37, 38 are formed, for example, to be substantially equal to the outer diameter of the elastic member 41 that is fitted to the shaft 22. In addition, the pair of arm members 37, 38 are restricted from being folded toward the shaft 22 side from the straightened state shown in FIG. 1 and the like by the pivot pin 39 coming into contact with the elastic member 41 fitted to the shaft 22 or with elastic member retainers 43, which will be described later.

In addition, the operation portions 31c of the clamping pieces 31, which are provided at both ends of the shaft 22, are formed so as to extend from the respective intermediate pivot portions 31a in the direction along the shaft 22 and so as to approach each other. As shown in FIG. 8, the operation portions 31c of the clamping pieces 31 are formed to have substantially the same width as the pair of arm members 37, 38.

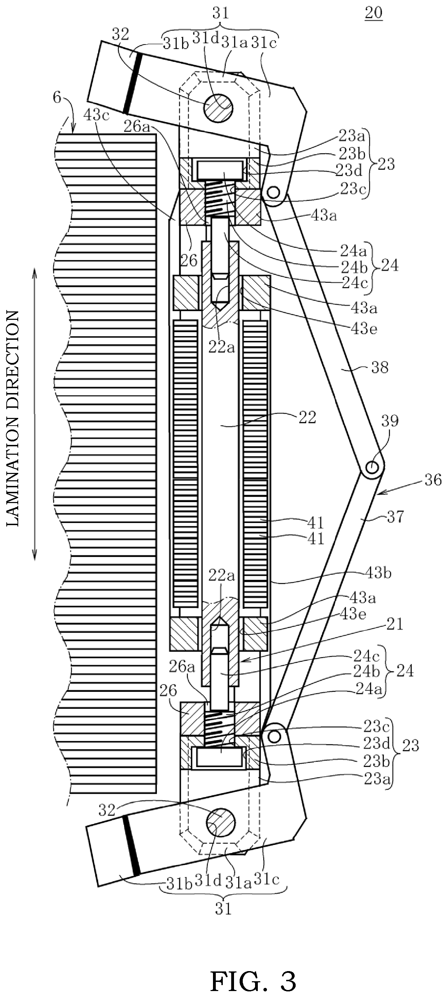

As described above, the pair of arm members 37, 38 are configured to be foldable because the first ends thereof are pivotally supported by the pivot pin 39. With such a configuration, in a state in which the pair of arm members 37, 38 are straightened as shown in FIG. 1, second ends (the operation portions 31c) of the pair of clamping pieces 31, 31 are separated from each other, and in a state in which the pair of arm members 37, 38 are folded as shown in FIG. 3, the second ends (the operation portions 31c) of the pair of clamping pieces 31, 31 approach each other.

Note that the length of the shaft 22 and the length of the pair of arm members 37, 38 constituting the operation connection portion 36 in the straightened state are determined in accordance with the length in the lamination direction of the laminated core 6 to be compressed and held.

As shown in FIG. 3, when the pair of arm members 37, 38 serving as the operation connection portion 36 are folded to bring the operation portions 31c of the pair of clamping pieces 31 closer to each other, the clamping portions 31b of the pair of clamping pieces 31, 31 are moved away from each other, and thereby, the pair of clamping pieces 31, 31 are moved to a separated position in which the clamping portions 31b are separated from the end faces of the laminated core 6 and the clamping of the laminated core 6 is released.

On the other hand, as shown in FIG. 1, when the pair of arm members 37, 38 are straightened to move the operation portions 31c of the pair of clamping pieces 31, 31 away from each other, the clamping portions 31b of the pair of clamping pieces 31 approach each other, and the pair of clamping pieces 31, 31 are moved to a clamping position in which the clamping portions 31b come into contact with the end faces of the laminated core 6 and clamp the laminated core 6 from the lamination direction. Note that, at this time, the pair of brackets 23 are each moved so as to be separated from the both ends of the shaft 22.

As shown in FIG. 1, an elastic member 41 that biases the pair of brackets 23, 23 toward each other is fitted to the shaft 22. The elastic member 41 in the present embodiment is a compression spring, and the elastic member 41 is configured to be compressed via the elastic member retainers 43 that are attached to the pair of brackets 23, 23, respectively.

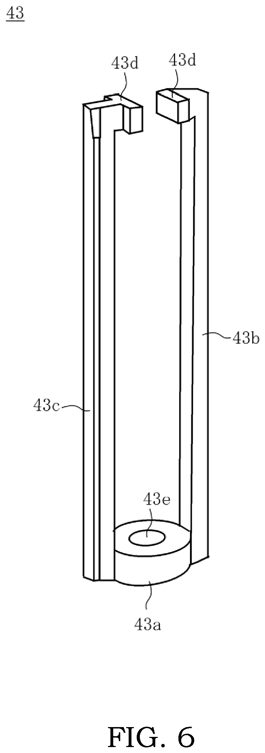

Because the pair of elastic member retainers 43 have the same structure, only one of them will be described in the following. As shown in FIG. 6, the elastic member retainer 43 has: a disc-shaped abutting portion 43a that is formed with, at the center, a round hole 43e through which the shaft 22 is inserted; a pair of pillar portions 43b, 43c that extend from both sides of the abutting portion 43a on opposite sides of the central axis of the abutting portion 43a in the direction of the central axis of the abutting portion 43a, so as to be formed in parallel to each other; and fixing portions 43d each provided at the tip of the pair of pillar portions 43b, 43c so as to protrude radially inward. Note that one of the pair of elastic member retainers 43 corresponds to "a first elastic member retainer" in the claims, and the other corresponds to "a second elastic member retainer" in the claims. Furthermore, the abutting portion 43a and the fixing portions 43d of the "first elastic member retainer" correspond to "a first abutting portion" and "first fixing portions" in the claims, respectively. In addition, the abutting portion 43a and the fixing portions 43d of the "second elastic member retainer" correspond to "a second abutting portion" and "second fixing portions" in the claims, respectively.

As shown in FIG. 5, the fixing block 26 is formed with recess portions 26b into which the fixing portions 43d of the elastic member retainer 43 are respectively fitted. In a state in which the fixing portions 43d of the elastic member retainer 43 are fitted into the recess portions 26b of the fixing block 26, the connecting pin 24 is inserted through the insertion hole 23c of the bracket 23 and the male thread portion 24b of the connecting pin 24 is screwed into the female threaded hole 26a of the fixing block 26, and thereby, the elastic member retainer 43 is connected to the bracket 23.

Then, by inserting the shaft 22 through the round hole 43e provided in the abutting portion 43a of the elastic member retainer 43 and attaching the fixing portions 43d to one bracket 23, the abutting portion 43a faces the end face of the elastic member 41 fitted to the shaft 22 on the side opposite to the end face facing the fixing portions 43d. Note that the pair of elastic member retainers 43 are respectively attached to the brackets 23, 23 such that the angular positions of the pillar portions 43b, 43c and the fixing portions 43d are different from each other.

By inserting the pin portions 24c of the connecting pins 24 into the pin holes 22a on both sides of the shaft 22, respectively, the pair of brackets 23 are each movably supported by the shaft 22. With such a configuration, the elastic member 41 fitted to the shaft 22 is sandwiched between the abutting portions 43a of the pair of elastic member retainers 43.

Note that in the case in which such elastic member retainers 43 are used, the pair of clamping pieces 31, 31 are pivotally supported by the brackets 23 that are provided at both ends of the shaft 22, and then, the operation connection portion 36 (the respective second ends of the pair of arm members 37, 38) is attached so as to connect the operation portions 31c of the pair of clamping pieces 31, 31 to each other.

In the core clamp device 20 configured as described above, when the pair of arm members 37, 38 are straightened and the pair of brackets 23, 23 are moved away from each other, the abutting portions 43a of the pair of elastic member retainers 43 are moved so as to approach each other. As a result, the elastic member 41 provided between the abutting portions 43a of the elastic member retainers 43 is compressed by the abutting portions 43a approaching each other.

Note that the compressed elastic member 41 biases the abutting portions 43a of the elastic member retainers 43 such that the interval between the abutting portions 43a is widened, and thus biases the brackets 23, on which the elastic member retainers 43 are respectively provided, in the direction in which the interval between the brackets 23 is narrowed.

The type of compression spring constituting the elastic member 41 is determined by the required biasing force, and in the present embodiment, as an example, the compression spring that is constituted by a plurality of disc springs laminated and fitted to the shaft 22 is illustrated. Each disc spring is a spring obtained by shaping a disc-shaped plate with a hole at the center into a conical shape, resulting in a shape resembling a dish without a bottom. A disc spring provides a spring action by applying a load to the upper part and the lower part of the cone and deflecting it in the direction of reducing the height.

The disc springs can receive a large load in a small mounting space, and various spring characteristics can be obtained by adjusting the number of laminated discs and the like. In the present embodiment, by fitting a plurality of disc springs to the shaft 22, the laminated state of the disc springs is maintained and displacement of the disc springs is prevented.

As lamination methods of the disc springs, there are known parallel stacking, in which the disc springs are stacked in the same orientation to exhibit the effect of a parallel spring, and series stacking, in which the disc springs are stacked in the alternating orientations to exhibit the effect of a series spring. As shown in the enlarged view in FIG. 1, the elastic member 41 is fitted to the shaft 22 by appropriately combining the lamination methods of the plurality of disc springs such that the required spring force is generated. In this manner, by adjusting the stacking orientations of the disc springs (such as stacking in the same orientation or stacking in different orientations), it is made easy to adjust various load characteristics.

Next, the compression operation of the laminated core 6 by the core clamp device 20 configured as described above will be described.

First, as shown in FIG. 3, the pair of arm members 37, 38 serving as the operation connection portion 36 are folded. Specifically, the pivot pin 39, which is the pivot point, is moved in the direction away from the shaft 22. Then, the operation portions 31c, 31c of the clamping pieces 31 approach each other, and each of the pair of clamping pieces 31, 31 swings about the pivot pin 32 provided on the corresponding bracket 23. As a result, the clamping portions 31b, 31b of the pair of clamping pieces 31, 31 are moved to the separated position where they are separated from each other.

Then, in a state in which the clamping portions 31b, 31b of the pair of clamping pieces 31 are in the separated position, the laminated core 6 is inserted between the clamping portions 31b, 31b.

In the present embodiment, the core clamp device 20 compresses, in the lamination direction, the tip end portion of the teeth portion 6b projecting radially outward from the annular portion 6a (see FIG. 12) of the laminated core 6. For this reason, the tip end portion of the teeth portion 6b of the laminated core 6 is inserted between the clamping portions 31b, 31b of the pair of clamping pieces 31, 31 such that the lamination direction is parallel to the shaft 22 (see FIG. 3).

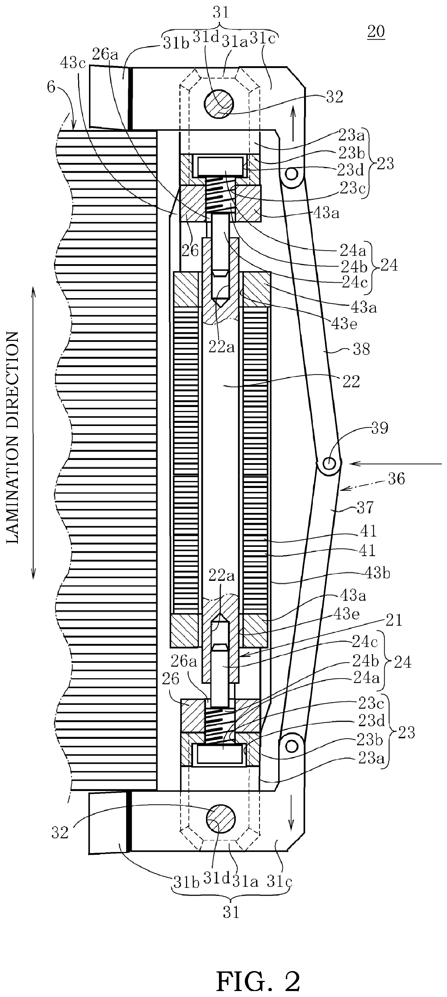

Next, as shown in FIG. 2, the pivot pin 39 of the pair of arm members 37, 38 is brought closer to the shaft 22 side. Specifically, the pair of arm members 37, 38 are straightened. As a result, the operation portions 31c of the pair of clamping pieces 31, 31 are moved in the direction of separating from each other, and the pair of clamping pieces 31, 31 respectively undergo rotational swinging about the pivot pins 32 provided on the brackets 23 as the centers. As a result, the clamping portions 31b of the pair of clamping pieces 31, 31 are moved in the direction of approaching each other and come into contact with the end faces of the laminated core 6 on both sides, respectively.

From this state, when the pivot pin 39 of the pair of arm members 37, 38 is further pushed toward the shaft 22 side, the operation portions 31c of the pair of clamping pieces 31, 31 are further moved so as to be separated from each other. Then, the pair of clamping pieces 31, 31 respectively undergo rotational swinging about the clamping portions 31b of the clamping pieces 31, 31 that have come into contact with the end faces of the laminated core 6 on both sides. As a result, the pair of brackets 23, 23 that pivotally support the pair of clamping pieces 31, 31 are separated from each other.

When the pair of brackets 23, 23 are separated from each other as described above, conversely, the abutting portions 43a of the elastic member retainers 43 respectively attached to the pair of brackets 23, 23 approach each other. Thus, the abutting portions 43a of the pair of elastic member retainers 43 come into contact with the end portions of the elastic member 41, which is fitted to the shaft 22, respectively (see FIG. 2).

Thereafter, when the pivot pin 39 of the pair of arm members 37, 38 is further pushed toward the shaft 22 side, the pair of arm members 37, 38 are straightened further (see FIG. 1). Once this state is established, the pair of brackets 23, 23 are further separated from each other, so the abutting portions 43a of the elastic member retainers 43 are moved further in the direction of approaching each other. As a result, the elastic member 41 fitted to the shaft 22 is compressed by the abutting portions 43a of the elastic member retainers 43 approaching each other.

As described above, by straightening the pair of arm members 37, 38 and separating the pair of brackets 23 from the both ends of the shaft 22, the elastic member 41 (the compression spring) fitted to the shaft 22 is compressed. Note that by the restoring force exerted by the elastic member 41, the elastic member 41 generates a biasing force for causing the brackets 23 to approach each other.

In a state in which the clamping portions 31b of the pair of clamping pieces 31, 31 are in contact with the end faces of the laminated core 6 on both sides, the pair of arm members 37, 38 connecting the operation portions 31c of the pair of clamping pieces 31, 31 are slightly deflected, and based on the lever principle, the force for straightening the pair of arm members 37, 38 is extremely small compared to the force for directly compressing the elastic member 41. By using the disc spring with a relatively high biasing force as the elastic member 41, it is possible to reliably compress the plurality of laminated elastic members 41.

In addition, as shown in FIG. 1, in the straightened state, with the pair of arm members 37, 38, the pivot pin 39 is moved toward the elastic member 41 side and comes into contact with the elastic member 41 or the pillar portions 43b, 43c of the elastic member retainer 43 that sandwich the elastic member 41. With such a configuration, further folding of the pair of arm members 37, 38 is restricted.

By slightly folding the pair of arm members 37, 38 toward the shaft 22 side from the state in which the pair of arm members 37, 38 are in a straight line, the biasing force exerted by the elastic member 41 acts in the direction of bringing the pair of brackets 23, 23 closer to each other. As a result, the biasing force acts on the pair of arm members 37, 38 in the direction in which the pivot pin 39 moves toward the elastic member 41 side, and so, the pair of arm members 37, 38 are held in the state shown in FIG. 1. Therefore, the elastic member 41 is maintained in the compressed state.

The biasing force exerted by the compressed elastic member 41 that tends to bring the pair of brackets 23, 23 that have been lifted from the both ends of the shaft 22 close to each other biases the intermediate pivot portions 31a of the clamping pieces 31 provided on the brackets 23 in the direction of approaching each other, that is, in the direction of folding the pair of arm members 37, 38 toward the shaft 22 side. However, as described above, because the pivot pin 39 comes into contact with the elastic member 41 or the pillar portions 43b, 43c of the elastic member retainer 43, further folding of the pair of arm members 37, 38 is restricted. Thus, with the operation portions 31c of the pair of clamping pieces 31, 31 serving as fulcrums, a force acts on the clamping portions 31b of the pair of clamping pieces 31, 31 such that the clamping portions 31b are moved closer to each other. As a result, the clamping portions 31b, 31b of the pair of clamping pieces 31, 31 sandwich and compress the laminated core 6 from both sides in the lamination direction.

As described above, after compressing the laminated core 6 using the core clamp device 20, the wire winding is performed on the teeth portion 6b of the laminated core 6 using the conventional winding device 10.

The winding device 10 shown in FIG. 11 causes the nozzle 13 to revolve around the teeth portion 6b that is provided so as to project radially from the annular portion 6a of the laminated core 6, thereby winding a wire rod 16 delivered from the tip of the nozzle 13 around the teeth portion 6b.

In the wire rod winding method using the winding device 10, the compression is performed by the core clamp device 20 on all the tip end portions of the teeth portions 6b that project radially and require the wire winding. The nozzle 13 is caused to revolve around the teeth portion 6b of the laminated core 6 that is compressed in the lamination direction by the core clamp device 20, and the wire rod 16 is wound around the teeth portion 6b.

In the winding method of the present embodiment, first, the laminated core 6 in which the tip end portion of the teeth portion 6b has been compressed using the core clamp device 20 is mounted on the winding device 10. In the winding device 10 in FIG. 11, the laminated core 6 is mounted on the winding device 10 by horizontally placing the annular portion 6a of the laminated core 6 on the upper edge of the rod-shaped core rod 11a extending in the vertical direction and pressing the annular portion 6a of the laminated core 6 from above with the pressing member 11b.

In the subsequent wire winding, by combining the swinging of the laminated core 6 and the movement of the nozzle 13, the tip of the nozzle 13 is caused to revolve around the teeth portion 6b, and the wire rod 16 delivered from the nozzle 13 is wound around the teeth portion 6b.

When the core clamp device 20 compresses the tip of the teeth portion 6b, it is preferable that the outer diameter of the elastic member 41 fitted to the shaft 22 be smaller than the width of the tip of the teeth portion 6b. By employing such a configuration, the core clamp device 20 is prevented from protruding beyond the width direction of the teeth portion 6b into the slot between the teeth portions 6b into which the nozzle 13 enters. Therefore, a situation in which the nozzle 13 moving while entering the slot interferes with the core clamp device 20 of the present invention is avoided.

In addition, in the conventional winding device 10, the tip of the nozzle 13 is caused to enter the slots between the teeth portions 6b from the outside of the teeth portions 6b to wind the wire rod around each of the teeth portions 6b. The core clamp device 20 of the present embodiment has a configuration in which the elastic member 41 is fitted to the shaft 22 that extends in parallel to the lamination direction of the teeth portions 6b, and therefore, it is possible to suppress the core clamp device 20 from largely protruding radially outward beyond the tip of the teeth portions 6b. As a result, it is possible to avoid interference between the revolving nozzle 13 and the core clamp device 20.

Even if there is a risk of interference, by using the nozzle 13 that is longer than the protrusion amount of the core clamp device 20 protruding in the radial direction from the teeth portion 6b, it is possible to reliably avoid interference between the revolving nozzle 13 and the core clamp device 20.

In addition, the nozzle 13 also revolves to the outside of the teeth portion 6b in the lamination direction, but as shown in FIGs. 1 to 3 and the like, the core clamp device 20 has a configuration in which only the pair of clamping pieces 31, 31 provided on both sides of the shaft 22 project from the end faces of the laminated core 6. Therefore, for example, compared to the protrusion amount of the male screw 3 when the screw type clamp device 5 as shown in FIG. 15 is used, the protrusion amount in the lamination direction of the laminated core 6 can be made remarkably smaller. As a result, it is possible to avoid the interference between the revolving nozzle 13 and the core clamp device 20.

As described above, even when the laminated core 6 is compressed and held by the core clamp device 20, the wire winding can be performed by using the conventional winding device 10.

In addition, because the laminated core 6 is a laminated body of magnetic steel plates, slight gaps exist between the magnetic steel plates. However, by compressing the tip end portion of the teeth portion 6b of the laminated core 6 with the core clamp device 20 and compressing the annular portion 6a with the support tool 11, the gaps in the lamination direction can be eliminated at the point in time when the wire winding is started. As a result, even when the wire winding is performed on the teeth portion 6b by the winding device 10 to form the coil, the laminated core 6 does not contract during the wire winding, and it is possible to prevent the winding disorder from occurring in the formed coil.

In particular, in the core clamp device 20 of the present embodiment, because a laminated stack of the disc springs with a relatively large spring force is used as the elastic member 41 (the compression spring), it is possible to compress the laminated core 6 with a large biasing force and to reliably eliminate the gaps between the magnetic steel plates.

In the present embodiment, the disc springs are used as the elastic member 41. Because each of the disc springs has a small and flat shape, the entire core clamp device can be made compact. The biasing force exerted by the elastic member 41 in the present embodiment is determined by the type, number, and arrangement of the disc springs, and thus various load characteristics can be easily achieved.

In addition, when the biasing force exerted by the elastic member 41 is to be changed, the biasing force can be easily changed by changing the type, number, and arrangement of the disc springs.

Furthermore, when it becomes necessary to change the length in the lamination direction of the laminated core 6, it is possible to easily obtain the core clamp device 20 having a different length simply by changing the length of the shaft 22 and the pair of arm members 37, 38, and the like.

Note that in the embodiment described above, the case has been described where the laminated core 6 whose tip end portion of the teeth portion 6b has been compressed in advance using the core clamp device 20 is mounted on the winding device 10, but the present invention is not limited to this, and it is also acceptable to mount the laminated core 6 on the winding device 10 in advance and then compress the tip end portion of the teeth portion 6b of the laminated core 6 using the core clamp device 20.

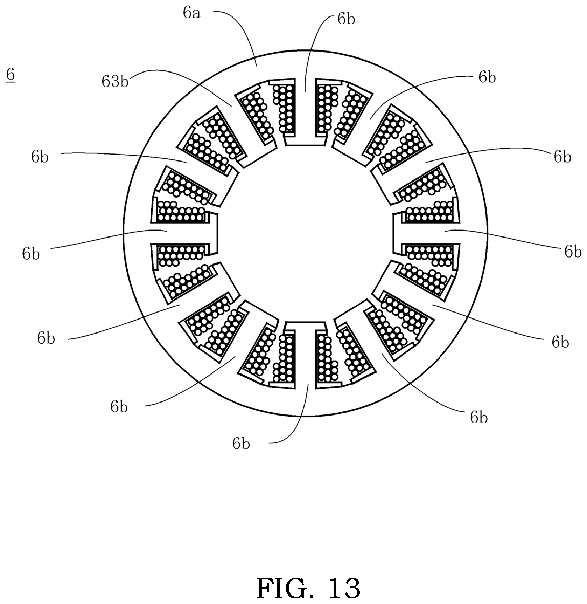

In addition, in the embodiment described above, the case has been described where the laminated core 6 is of the outer rotor type having a plurality of teeth portions 6b projecting radially outward from the outer peripheral surface of the annular portion 6a as shown in FIG. 12. However, the present invention is not limited to this, and for example, as shown in FIG. 13, the laminated core 6 may also be of the inner rotor type that is configured such that a plurality of teeth portions 6b project from the annular portion 6a having an annular shape toward the center direction (radially inward).

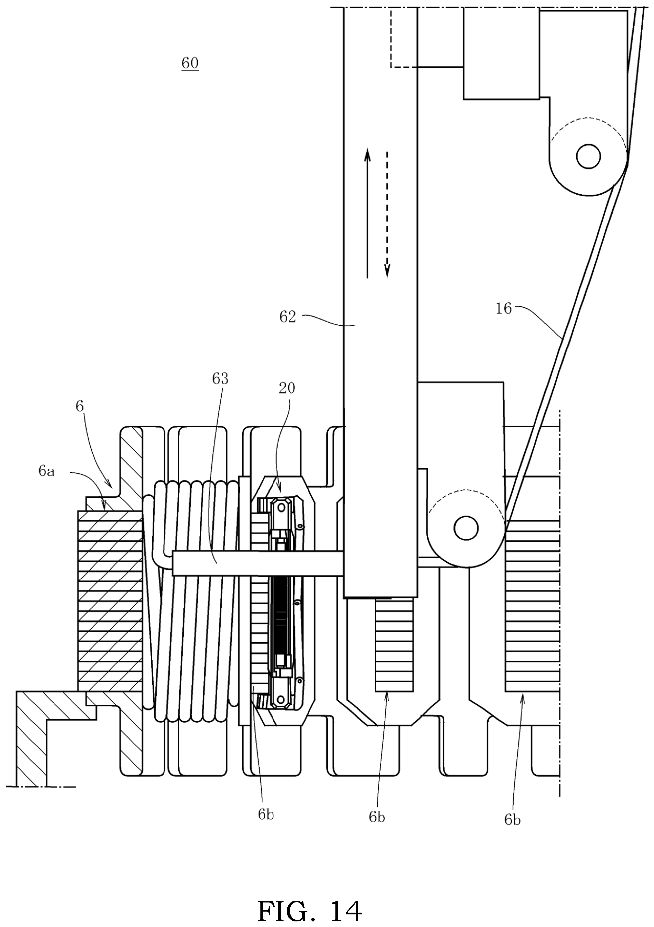

Note that as a winding device for performing the wire winding on the teeth portions 6b of the inner rotor type laminated core 6, there may be exemplified a winding device in which a nozzle 63 is attached to the tip end portion of a support rod 62 capable of entering the inside of the annular portion 6a of the laminated core 6, as shown in FIG. 14.

Even with the winding device 60 shown in FIG. 14, by combining the swinging of the laminated core 6 and the movement of the nozzle 63, the tip of the nozzle 63 is caused to revolve around the teeth portion 6b, and the wire rod 16 delivered from the nozzle 63 can be wound around the teeth portion 6b.

In addition, in the embodiment described above, the case has been described where the tip end portion of the teeth portion 6b of the laminated core 6 is compressed by the core clamp device 20, but as long as the winding disorder of the coil can be prevented, the wire winding may also be performed by compressing the annular portion 6a of the laminated core 6 with the core clamp device 20. Furthermore, both the annular portion 6a of the laminated core 6 and the tip end portion of the teeth portion 6b may each be compressed by the core clamp device 20, and in that state, the wire winding may be performed by the winding device 10, 60.

In particular, in the case of performing the wire winding of a so-called split laminated core in which the annular portion 6a is divided for each teeth portion 6b in the inner rotor type laminated core 6, both the divided annular portion 6a and the tip end portion of the teeth portion 6b projecting from the divided annular portion 6a may each be compressed by the core clamp device 20. By doing so, even in the wire winding of a split laminated core, the wire winding can be performed by a conventional winding device and the winding disorder of the obtained coil can be prevented.

In addition, in the embodiment described above, the case has been described where the stator of a rotating electrical machine is the winding target. However, although not shown, when the rotor of a rotating electrical machine has a laminated core, the core clamp device 20 may also be used in the laminated core of the rotor to eliminate gaps between the laminated magnetic steel plates and perform the wire winding.

Furthermore, in the embodiment described above, the case has been described where the elastic member 41 (the compression spring) is constituted by disc springs fitted to the shaft 22 as an example, but the elastic member 41 (the compression spring) is not limited to disc springs as long as it can eliminate the gaps between the magnetic steel plates by compressing and holding the laminated magnetic steel plates constituting the laminated core 6, and other springs, for example coil springs, may also be used.

The configurations, operations, and effects of the embodiments of the present invention will be collectively described below.

The core clamp device 20 compresses the laminated core 6 constituted by the plurality of laminated magnetic steel plates in the lamination direction of the magnetic steel plates. The core clamp device 20 includes the pair of clamping pieces 31, 31 provided to respectively face the end faces of the laminated core 6 on both sides in the lamination direction; the support portion 21 extending in the lamination direction, the support portion 21 being configured to swingably support the pair of clamping pieces 31, 31; and the elastic member 41 provided between the pair of clamping pieces 31, 31, the elastic member 41 being configured to apply the biasing force to the pair of clamping pieces 31, 31 to compress the laminated core 6 in the lamination direction.

With this configuration, the pair of clamping pieces 31, 31 that compress the laminated core 6 are provided on the support portion 21 arranged along the laminated core 6, and the elastic member 41 that applies the biasing force to compress the laminated core 6 in the lamination direction is provided between the pair of clamping pieces 31, 31. With such a configuration, it is possible to suppress the length of the core clamp device 20 in the lamination direction from becoming long. In other words, because the core clamp device 20 does not have a portion that protrudes greatly from the outer surface of the compression location of the laminated core 6, the core clamp device 20 can be made compact. Furthermore, because the core clamp device 20 can avoid interference with the winding portion such as the nozzle and the like that is moved during the wire winding, it is possible to enable the wire winding in a state in which the laminated core 6 is compressed by the core clamp device 20 even with a conventional winding device.

Furthermore, in the laminated core 6 compressed by the core clamp device 20, the gaps between the laminated magnetic steel plates in the lamination direction can be eliminated at the point in time when the wire winding is started. As a result, even when the wire winding is performed by the winding device to form the coil, the gaps are not compacted during the wire winding, and thus it is possible to prevent the winding disorder from occurring in the coil.

In addition, in the core clamp device 20, the support portion 21 has: the shaft 22 extending in the lamination direction of the laminated core 6; and the pair of brackets 23, 23 respectively provided at the both ends of the shaft 22 so as to be movable toward and away from the shaft 22, the pair of brackets 23, 23 being configured to respectively support the pair of clamping pieces 31, 31, and the elastic member 41 is fitted to the shaft 22, the elastic member 41 being configured to bias the pair of brackets 23, 23 toward each other.

With this configuration, because the elastic member 41 is fitted to the shaft 22, the core clamp device 20 can be made even more compact.

The core clamp device 20 further includes the operation connection portion 36 configured to cause the pair of clamping pieces 31, 31 to swing, wherein each of the pair of clamping pieces 31, 31 has: the intermediate pivot portion 31a swingably supported by the bracket 23; the clamping portion 31b provided on the first end side of the intermediate pivot portion 31a, the clamping portion 31b facing the end face of the laminated core 6 in the lamination direction; and the operation portion 31c provided on the second end side of the intermediate pivot portion 31a, the operation portion 31c being connected to the operation connection portion 36, and the operation connection portion 36 is configured to cause the pair of clamping pieces 31, 31 to swing between: the clamping position in which the clamping portions 31b of the pair of clamping pieces 31, 31 are brought closer to each other by separating the operation portions 31c of the pair of clamping pieces 31, 31 from each other; and the separated position in which the clamping portions 31b of the pair of clamping pieces 31, 31 are separated from each other by bringing the operation portions 31c of the pair of clamping pieces 31, 31 closer to each other.

With this configuration, the pair of clamping pieces 31, 31 can be simultaneously swung by the single operation connection portion 36.

In the core clamp device 20, the operation connection portion 36 connects the second ends of the pair of clamping pieces 31, 31 to each other, the operation connection portion 36 having the pair of foldable arm members 37, 38, and the pair of clamping pieces 31, 31 are moved to the clamping position by bringing the pair of arm members 37, 38 into the straightened state, and the pair of clamping pieces 31, 31 are moved to the separated position by bringing the pair of arm members 37, 38 into the folded state.

With this configuration, because the operation connection portion 36 is constituted by the pair of arm members 37, 38, the number of parts can be reduced and an increase in cost can be suppressed.

In the core clamp device 20, the elastic member 41 is the compression spring fitted to the shaft 22, and the core clamp device 20 further includes: the elastic member retainer 43 (the first elastic member retainer) having: the abutting portion 43a (the first abutting portion) configured to abut a first end face of the elastic member 41; and the fixing portion 43d (the first fixing portion) connected to the abutting portion 43a (the first abutting portion), the fixing portion 43d (the first fixing portion) being attached to the bracket 23 positioned on the second end face side of the elastic member 41; and the elastic member retainer 43 (the second elastic member retainer) having: the abutting portion 43a (the second abutting portion) configured to abut the second end face of the elastic member 41; and the fixing portion 43d (the second fixing portion) connected to the abutting portion 43a (the second abutting portion), the fixing portion 43d (the second fixing portion) being attached to the bracket 23 positioned on the first end face side of the elastic member 41.

With this configuration, the pair of elastic member retainers 43 (the first elastic member retainer and the second elastic member retainer) can transmit the biasing force exerted by the elastic member 41 to the clamping pieces 31, 31 via the brackets 23 while allowing the movement of the brackets 23.

In the core clamp device 20, the elastic member 41 is constituted by the plurality of disc springs laminated and fitted to the shaft 22.

With this configuration, because the elastic member 41 is constituted by disc springs, the elastic member 41 can be fitted, and so, the length of the core clamp device 20 in the lamination direction can be suppressed from becoming long. In addition, the biasing force can be easily changed by changing the type, number, and arrangement of the disc springs.

In addition, in the wire rod winding method of winding the wire rod around the teeth portions 6b of the laminated core 6 constituted by a plurality of laminated magnetic steel plates, the laminated core 6 has: the annular portion 6a having the annular shape; and the plurality of teeth portions 6b projecting radially from the annular portion 6a, the teeth portions 6b being provided in plurality in the circumferential direction, and in a state in which at least any one of the annular portion 6a or the teeth portions 6b is compressed in the lamination direction of the magnetic steel plates by using the core clamp device 20, the nozzle 13 configured to deliver the wire rod from the tip is revolved to wind the wire rod around the teeth portions 6b.

With this configuration, in the laminated core 6 compressed by the core clamp device 20, the gaps between the laminated magnetic steel plates in the lamination direction can be eliminated at the point in time when the wire winding is started. As a result, even when the wire winding is performed by the winding device to form the coil, the gaps are not compacted during the wire winding, and thus it is possible to prevent the winding disorder from occurring in the coil.

Embodiments of the present invention were described above, but the above embodiments are merely examples of applications of the present invention, and the technical scope of the present invention is not limited to the specific constitutions of the above embodiments.

This application claims priority based on Japanese Patent Application No. 2023-199750 filed with the Japan Patent Office on November 27, 2023, the entire contents of which are incorporated into this specification by reference.

## Claims

1. A core clamp device configured to compress a laminated core constituted by a plurality of laminated magnetic steel plates in a lamination direction of the magnetic steel plates, the core clamp device comprising:
a pair of clamping pieces provided to respectively face end faces of the laminated core on both sides in the lamination direction;
a support portion extending in the lamination direction, the support portion being configured to swingably support the pair of clamping pieces; and
an elastic member provided between the pair of clamping pieces, the elastic member being configured to apply a biasing force to the pair of clamping pieces to compress the laminated core in the lamination direction.

2. The core clamp device according to Claim 1, wherein
the support portion has:
a shaft extending in the lamination direction of the laminated core; and
a pair of brackets respectively provided at both ends of the shaft so as to be movable toward and away from the shaft, the pair of brackets being configured to respectively support the pair of clamping pieces, and
the elastic member is fitted to the shaft, the elastic member being configured to bias the pair of brackets toward each other.

3. The core clamp device according to Claim 2, further comprising
an operation connection portion configured to cause the pair of clamping pieces to swing, wherein
each of the pair of clamping pieces has:
an intermediate pivot portion swingably supported by the bracket;
a clamping portion provided on a first end side of the intermediate pivot portion, the clamping portion facing the end face of the laminated core in the lamination direction; and
an operation portion provided on a second end side of the intermediate pivot portion, the operation portion being connected to the operation connection portion, and
the operation connection portion is configured to cause the pair of clamping pieces to swing between:
a clamping position in which the clamping portions of the pair of clamping pieces are brought closer to each other by separating the operation portions of the pair of clamping pieces from each other; and a separated position in which the clamping portions of the pair of clamping pieces are separated from each other by bringing the operation portions of the pair of clamping pieces closer to each other.

4. The core clamp device according to Claim 3, wherein
the operation connection portion connects the operation portions of the pair of clamping pieces to each other, the operation connection portion having a pair of foldable arm members, and
the pair of clamping pieces are moved to the clamping position by bringing the pair of arm members into a straightened state, and the pair of clamping pieces are moved to the separated position by bringing the pair of arm members into a folded state.

5. The core clamp device according to Claim 4, wherein
the elastic member is a compression spring fitted to the shaft, and
the core clamp device further comprises:
a first elastic member retainer having: a first abutting portion configured to abut a first end face of the elastic member; and a first fixing portion connected to the first abutting portion, the first fixing portion being attached to the bracket positioned on a second end face side of the elastic member; and
a second elastic member retainer having: a second abutting portion configured to abut the second end face of the elastic member; and a second fixing portion connected to the second abutting portion, the second fixing portion being attached to the bracket positioned on the first end face side of the elastic member.

6. The core clamp device according to Claim 5, wherein
the elastic member is constituted by a plurality of disc springs laminated and fitted to the shaft.

7. A wire rod winding method of winding a wire rod around teeth portions of a laminated core constituted by a plurality of laminated magnetic steel plates, wherein
the laminated core has:
an annular portion having an annular shape; and
a plurality of the teeth portions projecting radially from the annular portion, the teeth portions being provided in plurality in a circumferential direction, and
in a state in which at least any one of the annular portion or the teeth portions is compressed in a lamination direction of the magnetic steel plates by using the core clamp device according to Claim 1, a nozzle configured to deliver the wire rod from a tip is revolved to wind the wire rod around the teeth portions.
